# EUROPEAN PATENT APPLICATION

(11) **EP 3 671 173 A1**
(43) Date of publication of application: **24.06.2020**
(21) Application number: 19219163.3
(22) Date of filing: 20.12.2019
(51) Int. Cl.: G01M 15/14

(54) **METHODS AND SYSTEMS FOR MONITORING GAS TURBINE STARTUPS**

(30) Priority: 21.12.2018 US 201816229812
(71) Applicant: General Electric Company, Schenectady, NY 12345 (US)
(72) Inventor: NAIR, Gaurav, 560066 Bangalore, KA (IN); MISHRA, Pawan Kumar, 560066 Bangalore, KA (IN)
(74) Representative: Freigutpartners IP Law Firm

(57) **Abstract**

A method (130) for determining a performance characteristic for a target startup sequence of a gas turbine, wherein the gas turbine includes a compressor, a combustor, and, drivingly coupled to the compressor, a turbine. The method (130) includes the steps of: measuring (132) one or more operating parameters during a target operating period of the gas turbine, the target operating period being selected so that the target operating period includes the target startup sequence; creating (134) a time series plot from data points derived from the one or more operating parameters measured during the target operating period; comparing (136) the time series plot against a reference time series plot and, based on the comparison, determining a degree of similarity therebetween; and determining (138) a value for the performance characteristic based on the degree of similarity.

## Description

### BACKGROUND OF THE INVENTION

This present application relates to monitoring startup operations of turbine engines. More specifically, but not by way of limitation, the present application relates to methods and systems for monitoring startup operations of gas turbine engines.

Generally, combustion or gas turbine engines (hereinafter "gas turbines") include compressor and turbine sections in which rows of blades are axially stacked in stages. Each stage typically includes a row of circumferentially-spaced stator blades, which are fixed, and a row of rotor blades, which rotate about a central turbine axis or shaft. In operation, generally, the compressor rotor blades are rotated about the shaft, and, acting in concert with the stator blades, compress a flow of air. This supply of compressed air then is used within a combustor to combust a supply of fuel. The resulting flow of hot expanding combustion gases, which is often referred to as working fluid, is then expanded through the turbine section of the gas turbine. Within the turbine, the working fluid is redirected by the stator blades onto the rotor blades so to power rotation. The rotor blades are connected to a central shaft such that the rotation of the rotor blades rotates the shaft. In this manner, the energy contained in the fuel is converted into the mechanical energy of the rotating shaft, which, for example, may be used to rotate the rotor blades of the compressor, so to produce the supply of compressed air needed for combustion, as well as, rotate the coils of a generator so to generate electrical power.

The operation of gas turbines is initiated in accordance with a startup routine or, as used herein, a "startup sequence". Such startup operations are monitored by sensors and performance analytics for a variety of reason. Generally, because a gas turbine usually has several different ways in which it can be started, the monitoring of startup operations can include identifying the type of startup sequence (or "startup sequence type") that is being used to bring the unit on-line. Other types of performance characteristics are also monitored during startup operation. Conventional technology and analytics for identifying and monitoring gas turbines startups, however, are heavily dependent on manufacturer specific protocols and tags. Many modern-day gas turbine fleets have units made by several different manufactures. In order to extend the use of startup analytics more generally across such fleets, the dependency on such manufacture-specific analytics needs to be reduced or eliminated.

As will be appreciated, there are several sensors that are common to all gas turbines. Specifically, all gas turbines include sensors that measure turbine speed and the power output. Thus, if the data collected from these common sensors could be used to monitor startup operation across units from different manufacturers, then startup analytics could be made more manufacturer agnostic and more effectively applied across gas turbine fleets.

### BRIEF DESCRIPTION OF THE INVENTION

The present application thus describes a method for determining a performance characteristic for a target startup sequence of a gas turbine, wherein the gas turbine includes a compressor, a combustor, and, drivingly coupled to the compressor, a turbine. The method may include the steps of: measuring one or more operating parameters during a target operating period of the gas turbine, the target operating period being selected so that the target operating period includes the target startup sequence; creating a time series plot from data points derived from the one or more operating parameters measured during the target operating period; comparing the time series plot against a reference time series plot and, based on the comparison, determining a degree of similarity therebetween; and determining a value for the performance characteristic based on the degree of similarity.

These and other features of the present application will become apparent upon review of the following detailed description of the preferred embodiments when taken in conjunction with the drawings and the appended claims.

### BRIEF DESCRIPTION OF THE DRAWINGS

These and other features of this invention will be more completely understood and appreciated by careful study of the following more detailed description of exemplary embodiments of the invention taken in conjunction with the accompanying drawings, in which:
Figure 1 illustrates a schematic diagram of an exemplary gas turbine system with controllers in accordance with aspects and exemplary embodiments of the present invention;
Figure 2 illustrates a time series plot of turbine speed and power output related to an exemplary startup sequence for a gas turbine;
Figure 3 illustrates a plot that schematically represents a dynamic time warping comparison between a target startup sequence and a reference startup sequence;
Figure 4 illustrates a block diagram of a method in accordance with an exemplary embodiment of the present disclosure;
Figure 5 illustrates a plot that schematically represents using dynamic time warping to determine a time of startup completion of a target startup sequence; and
Figure 6 illustrates a block diagram of a method in accordance with an alternative embodiment of the present disclosure.

### DETAILED DESCRIPTION OF THE INVENTION

Aspects and advantages of the present application are set forth below in the following description, or may be obvious from the description, or may be learned through practice of the invention. Reference will now be made in detail to present embodiments of the invention, one or more examples of which are illustrated in the accompanying drawings. The detailed description uses numerical designations to refer to features in the drawings. Like or similar designations in the drawings and description may be used to refer to like or similar parts of embodiments of the invention. As will be appreciated, each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. It is intended that the present invention covers such modifications and variations as come within the scope of the appended claims and their equivalents. It is to be understood that the ranges and limits mentioned herein include all sub-ranges located within the prescribed limits, inclusive of the limits themselves unless otherwise stated. Additionally, certain terms have been selected to describe the present invention and its component subsystems and parts. To the extent possible, these terms have been chosen based on the terminology common to the technology field. Still, it will be appreciated that such terms often are subject to differing interpretations. For example, what may be referred to herein as a single component, may be referenced elsewhere as consisting of multiple components, or, what may be referenced herein as including multiple components, may be referred to elsewhere as being a single component. Thus, in understanding the scope of the present invention, attention should not only be paid to the particular terminology used, but also to the accompanying description and context, as well as the structure, configuration, function, and/or usage of the component being referenced and described, including the manner in which the term relates to the several figures, as well as, of course, the precise usage of the terminology in the appended claims. Further, while the following examples are presented in relation to certain types of gas turbines or turbine engines, the technology of the present application also may be applicable to other categories of turbine engines, without limitation, as would the understood by a person of ordinary skill in the relevant technological arts. Accordingly, it should be understood that, unless otherwise stated, the usage herein of the term "gas turbine" is intended broadly and with limitation as the applicability of the present invention to the various types of turbine engines.

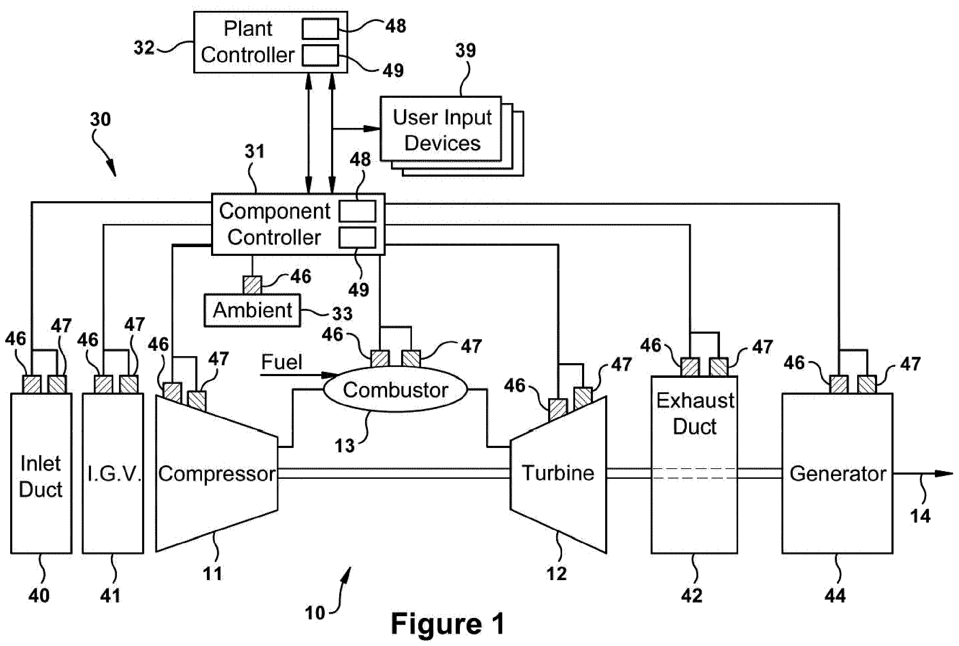

Referring now with specificity to the figures, Figure 1 is a schematic diagram of an exemplary gas turbine and control system-referred to collectively herein as a gas turbine system 30-aspects of which may be used in accordance with or to enable embodiments of the present invention. Figure 1 provides an exemplary gas turbine in accordance with the present invention or within which the present invention may be used. It will be understood by those skilled in the art that the present invention may not be limited to this type of usage, and that the examples are not meant to be limiting unless otherwise stated. Figure 1 schematically represents a gas turbine 10 that, in general, operates by extracting energy from a pressurized flow of hot gas produced by the combustion of fuel in a stream of compressed air.

The gas turbine 10 includes an axial compressor 11 that is mechanically coupled by a common shaft or rotor to a downstream turbine section or turbine 12, with a combustor 13 being positioned between the compressor 11 and the turbine 12. The gas turbine 10 is formed about a common central axis. In one example of gas turbine operation, the rotation of compressor rotor blades within the axial compressor 11 compresses a flow of air. In the combustor 13, energy is released when the compressed air is mixed with a fuel and ignited. The resulting flow of hot gases or "working fluid" from the combustor 13 is then directed over rotor blades within the turbine, which induces the rotation of the blades about the shaft. In this way, the energy of the flow of working fluid is transformed into the mechanical energy of the rotating blades and, given the connection between the rotor blades and the shaft, the rotating shaft. The mechanical energy of the shaft then may be used to drive the rotation of the compressor rotor blades, such that the necessary supply of compressed air is produced, and, for example, the coils of a generator to produce electricity.

As also shown, the gas turbine system 30 may include an inlet duct 40 that channels ambient air into the compressor 11. Injected water and/or other humidifying agent may be channeled to the compressor 11 through the inlet duct 40. The inlet duct 40 may have filters, screens and sound absorbing devices that contribute to a pressure loss of ambient air flowing through the inlet duct 40. From the inlet duct 40, the air may flow through inlet guide vanes 41 of compressor 11. As further illustrated, the gas turbine system 30 may include an exhaust duct 42 that channels combustion gases from an outlet of turbine 12 through, for example, emission control and sound absorbing devices. Further, the turbine 12 may drive a generator 44 that produces electrical power.

The gas turbine system 30 may further include a component controller 31 that controls the operation of the gas turbine 10. In cases where the gas turbine system 30 is part of a power plant having more power generating assets, the component controller 31 may connect to a plant controller 32, each of which may connect to one or more user input devices 39 for receiving communications from a user or operator. Alternatively, it will be appreciated that the component controller 31 and the plant controller 32 may be combined into a single controller.

As part of the gas turbine system 30, several sensors 46 may be included that monitor the operation of the gas turbine 10 by detecting or measuring various operating conditions or parameters throughout the system, including, for example, conditions within the compressor 11, combustor 13, turbine 12, generator 44, as well as the ambient environment 33. For example, the sensors 46 may include temperature sensors that monitor ambient temperature, compressor discharge temperature, turbine exhaust temperature, and other temperatures along the flow path of the working fluid within the gas turbine 10. Further, the sensors 46 may include acoustic or pressure sensors that monitor ambient pressure, static and dynamic pressure levels at the compressor inlet, compressor outlet, turbine exhaust, and at other suitable locations within the gas turbine 10. The sensors 46 also may include humidity sensors, such as wet and dry bulb thermometers, that measure ambient humidity in the inlet duct of the compressor 11. The sensors 46 also may include flow sensors, velocity sensors, such as rotor velocity sensors, acceleration sensors, flame detector sensors, valve position sensors, guide vane angle sensors and any other sensors that are typically used to measure various operating parameters and conditions relative to the operation of the gas turbine system 30. As used herein, the term "parameter" refers to measurable physical properties of operation which may be used to define operating conditions within a system, such as gas turbine system 30 or other system described herein. Such operating parameters may include temperature, pressure, humidity and gas flow characteristics at locations defined along the path of the working fluid, as well as ambient conditions, fuel characteristics, and other measurables as may be suitable. The sensors 46 also may sense and collect measurements on operating parameters during startup operations of the gas turbine 10. For example, the sensors 46 may be configured to measure turbine speed and the power output during startup sequences of the gas turbine 10.

It will be appreciated that gas turbine system 30 also may include several actuators 47 by which control of the gas turbine 10 is achieved. For example, the actuators 47 may include electro-mechanical devices having variable setpoints or settings that allow the manipulation of certain process inputs (i.e., manipulated variables) for the control of process outputs (i.e., controlled variables) in accordance with a desired result or mode of operation. For example, commands generated by the component controller 31 may cause one or more actuators 47 within the turbine system 30 to adjust valves between the fuel supply and combustor 13 that regulate the flow level, fuel splits, and/or type of fuel being combustor. As another example, commands generated by control system 31 and/or plant controller 32 may cause one or more actuators to adjust an inlet guide vane setting that alters their angle of orientation. In addition, commands generated by the component controller 31 may control a startup operation or sequence, including rotational velocities and acceleration of the rotor of the turbine 12 and/or compressor 11.

The component controller 31 may be a computer system a processor 48 and a memory 49. The processor 48 may executes program code to control the operation of the gas turbine system 30 using sensor measurements and actuators, and/or instructions received from an operator. As discussed in more detail below, software executed by the controller 31 may include scheduling algorithms for regulating any of the subsystems described herein. The component controller 31 may regulate gas turbine 10 or gas turbine system 30 based, in part, on algorithms stored in its memory 49. These algorithms, for example, may enable the component controller 31 to maintain the NOx and CO emissions in the turbine exhaust to within certain predefined emission limits, or, in another instance, maintain the combustor firing temperature to within predefined limits. It will be appreciated that algorithms may include inputs for parameter variables such as compressor pressure ratio, ambient humidity, inlet pressure loss, turbine exhaust backpressure, as well as any other suitable parameters. The schedules and algorithms executed by the component controller 31 may accommodate variations in ambient conditions that affect emissions, combustor dynamics, firing temperature limits at full and part-load operating conditions, etc. As discussed in more detail below, the component controller 31 may apply algorithms for scheduling the gas turbine, such as those settings relating to desired turbine exhaust temperatures and combustor fuel splits, with the objective of satisfying performance objectives while complying with operability boundaries of the engine. Similarly, the plant controller 32 may be a computer system having a processor 48 and a memory 49.

Turning now to the present invention, startup operations of gas turbines are monitored by a several sensors for a variety of reasons, which, for example, include performance analytics, unit health diagnostics, and tracking component degradation. Conventional technology and analytics for monitoring startup operation, however, remain heavily dependent on manufacturer specific tags and protocols. This presents an issue for modern-day gas turbine fleets because most typically have units originating from different manufactures. Thus, in order to extend the use of startup analytics in a uniform basis across such fleets, the dependency on manufacture-specific startup protocols has be reduced or eliminated. Toward this objective, there are several sensors that are common to all manufactured gas turbines. Specifically, all gas turbines include sensors that measure turbine speed and power output. As proposed herein, the data from these common sensors can be used in a particular way so that the monitoring of startup operations across a diverse fleet of gas turbine may be made more uniform and consistent. In this way, startup analytics may become manufacturer agnostic so that they may be applied more efficiently while also enhancing results.

Typically, gas turbine units can be started in several different ways-referred to herein as type of startup sequence or "startup sequence type"-with the selection between types being based on such factors as conditions, need, and available time. For example, a gas turbine unit may have a conventional startup sequence, a fast-start startup sequence, as well as others depending on requirements. Additionally, startup operations may be classified as successful and unsuccessful depending on whether the desired operational result for the unit was achieved. One aspect of startup monitoring is to identify the startup sequence type for each startup operation for each gas turbine unit. Along these lines, systems and methods are disclosed herein that utilize speed and/or power output time series plots to determine startup sequence type, startup completion time, and/or other startup characteristics for gas turbine startup operations.

In accordance with example embodiments, a process utilizing aspects of dynamic time warping (or "DTW') is proposed to identify startup sequence type and/or determine a startup completion time. As will be appreciated, DTW is a method that calculates an optimal match between two given sequences (for example, time series or time series plots) given certain restrictions or rules. The sequences are "warped" non-linearly in the time dimension to determine a measure of their similarity independent of certain non-linear variations in the time dimension. In time series analysis, thus, DTW represents an algorithm for measuring similarity between two temporal sequences that may vary in speed. An example of a restriction or rule is that every index from the first sequence must be matched with one or more indices from the other sequence, and vice versa. The optimal match is denoted by the one that satisfies all the restrictions and the rules and that has the minimal cost or, as used herein, "distance", where the distance is computed as the sum of absolute differences between the values for each matched pair of indices.

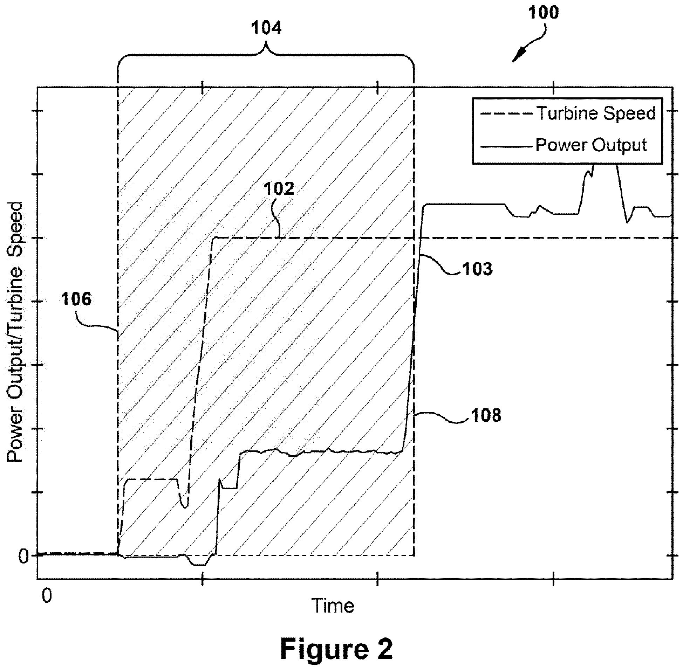

With particular reference now to Figure 2, an exemplary time series plot 100 is shown of a particular gas turbine startup sequence. As shown, the time series plot 100 shows turbine speed 102 and power output 103 versus time. The shaded region indicates the actual startup sequence 104, with the startup sequence 104 being defined between a beginning of the startup sequence (also "beginning-of-start") 106 and an end of the startup sequence (also "end-of-start") 108, the time of which marks the startup completion time. The beginning-of-start 106 may represent an activation of gas turbine, such as, for example, the turbine speed 102 exceeding a defined threshold. The end-of-start 108 may be defined by other predetermined thresholds that are derived from turbine speed 102, power output 103, and/or the gas turbine reaching emissions compliance mode. In accordance with exemplary embodiments, the variable used for comparison is turbine speed, power output, or the sum of turbine speed and power output.

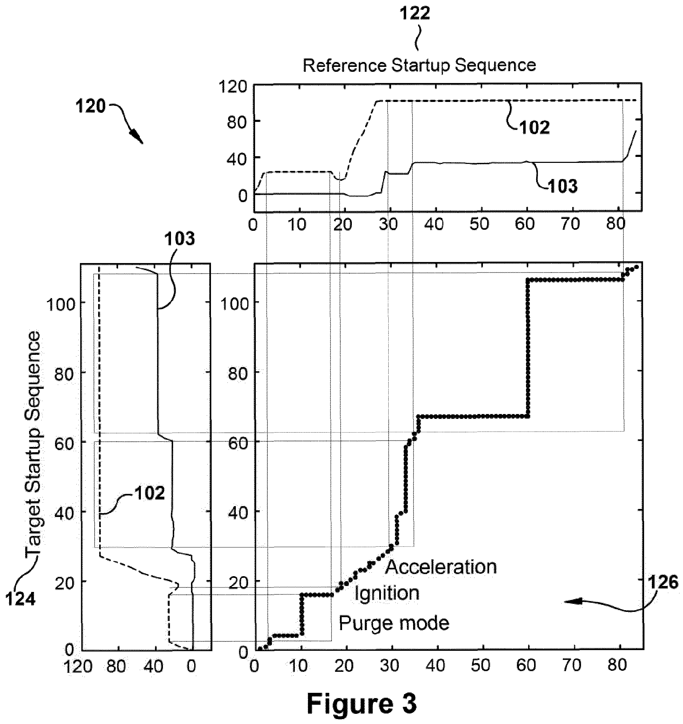

With reference now to an exemplary DTW comparison plot 120 of Figure 3, systems and method of the present invention include using DTW to calculate a degree of similarity between a reference startup sequence 122 and a target startup sequence 124. In accordance with exemplary embodiments, the reference startup sequence 122 reflects a time series plot of data, such as, for example, turbine speed 102 and power output 103, which is collected from a previously completed startup sequence of the gas turbine. The previous startup sequence from which this data is taken may be selected according to a desirable startup outcome, for example, one in which the startup operation was successful and/or include one or more other desirable performance characteristics. As used herein, the target startup sequence 124 is a time series plot of data taken from a current or present startup sequence for which certain performance characteristics are unknown. Thus, in accordance with embodiments of the present disclosure, the target startup sequence 124 is compared to the reference startup sequence 122 using a DTW algorithm in order to determine one or more performance characteristics, such as startup sequence type or a time of startup completion, i.e., when the end-of-start is achieved.

As further indicated in the DTW comparison plot of Figure 3, the DTW process may include producing a warping path map 126. As will be appreciated, the warping path map 126 may be used in the DTW comparison if the present disclosure as a way of determining which region of the target startup sequence 124 gets mapped to which region of the reference startup sequence 122. Specifically, the warping path map 126 is used to better aligned regions within the time series pots that correspond. Thus, as indicated, within the warping path 126, several different operating modes within the reference startup sequence 122 are indicated, including, for example, a purge mode, ignition, and acceleration. If the operating modes are designated in the reference startup sequence 124, then the corresponding region in the target startup sequence 122 should reflect the same operating mode.

In this way, the DTW method can be used to compare a target startup sequence to a reference startup sequence and, therefrom, calculate a degree of similarity that, as will be seen, can be used to discern information about the target startup sequence. As stated above, the degree of similarity may be related to a calculated "distance" between the two time series, where the distance is computed as the sum of absolute difference between the values for each matched pair of indices within the two time series. As will be appreciated, the greater the distance, the less similar to two time series are.

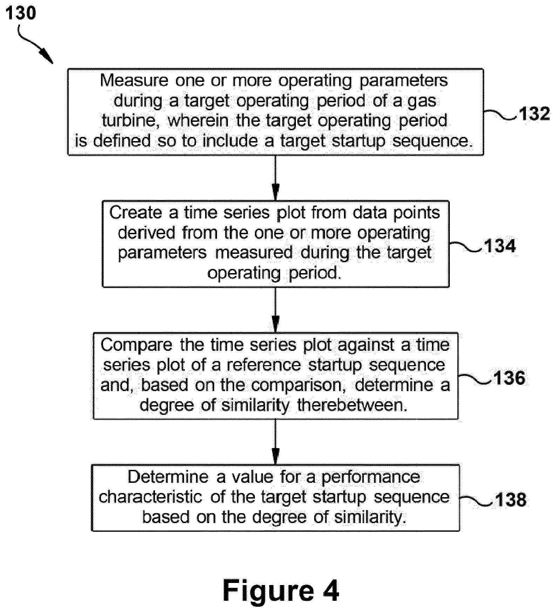

With reference now to Figure 4, a process is shown in relation to a flow diagram 130 in accordance with an exemplary embodiment of the present disclosure. As will be seen, the process of the flow diagram 130 provides a way from determining a performance characteristic related to a target startup sequence of a gas turbine. As shown, at an initial step 132, the process includes measuring one or more operating parameters during a target operating period of the gas turbine, wherein the target operating period is defined so to include the target startup sequence. At a step 134, as shown, the process includes creating a time series plot from data points derived from the measured operating parameters during the target operating period, which will be referred to as a "target time series plot". At a step 136, the process includes comparing the target time series plot against a reference time series plot and, based on the comparison, determining a degree of similarity therebetween. Finally, at a step 138, the process of the flow diagram 130 includes determining a value for the performance characteristic for the target startup sequence based on the degree of similarity.

In accordance with exemplary embodiments, the step 136 of comparing the target time series plot against the reference time series plot may include a dynamic time warping ("DTW") algorithm or method. The one or more measured operating parameters may include rotor speed and/or power output of the gas turbine. Further, in accordance with exemplary embodiments, the data points used to create the target time series plot in the step 134 may be the rotor speed, the power output, or the sum of the rotor speed and the power output. The reference time series plot will correspond to the format of the data of the target time series plot.

In accordance with exemplary embodiments, the performance characteristic determined by the method is a classification of the target startup sequence as being either a successful startup or an unsuccessful startup.

Alternatively, the performance characteristic determined by the method is a classification of the target startup sequence as being a particular type of startup sequence. Specifically, the gas turbine may have a plurality of startup sequence types, which, for the sake of this example, includes at least a first startup sequence type and second startup sequence type, and the performance characteristic determined by the process is to classify the target startup sequence as being either the first startup sequence type or second startup sequence type. In such cases, the reference time series plot may include a first reference time series plot and a second reference time series plot that corresponds respectively to the first and second startup sequence types. That is, the first reference time series plot corresponds to the first startup sequence type, with the first reference time series plot including data points derived from operating parameters measured during a previous startup sequence of the first startup sequence type. And, the second reference time series plot corresponds to the second startup sequence type, with the second reference time series plot including data points derived from operating parameters measured during a previous startup sequence of the second startup sequence type.

To continue the example, the step of comparing the target time series plot against the reference time series plot may include: comparing the target time series plot against the first reference time series plot and, based on the comparison, deriving a first degree of similarity therebetween; and comparing the target time series plot against the second reference time series plot and, based on the comparison, deriving a second degree of similarity therebetween. The method may then include the step of determining whether the target time series plot has a greater degree of similarity to the first reference time series plot or the second reference time series plot based on the relative values of the first degree of similarity and the second degree of similarity. That is, in accordance with exemplary embodiments, the target startup sequence would be classified as the first startup sequence type if the target time series plot is determined to have the greater degree of similarity with the first reference time series plot than the second reference time series plot. Alternatively, the target startup sequence would be classified as the second startup sequence type if the target time series plot is determined to have the greater degree of similarity with the second reference time series plot than the first reference time series plot.

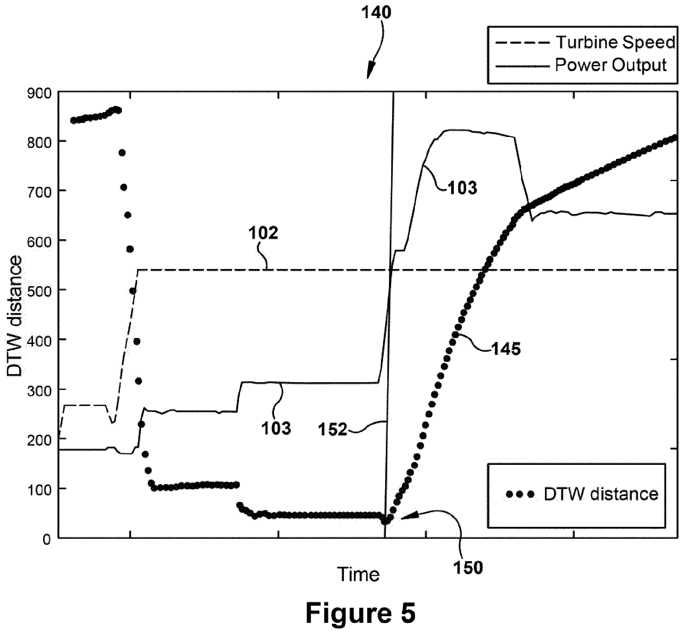

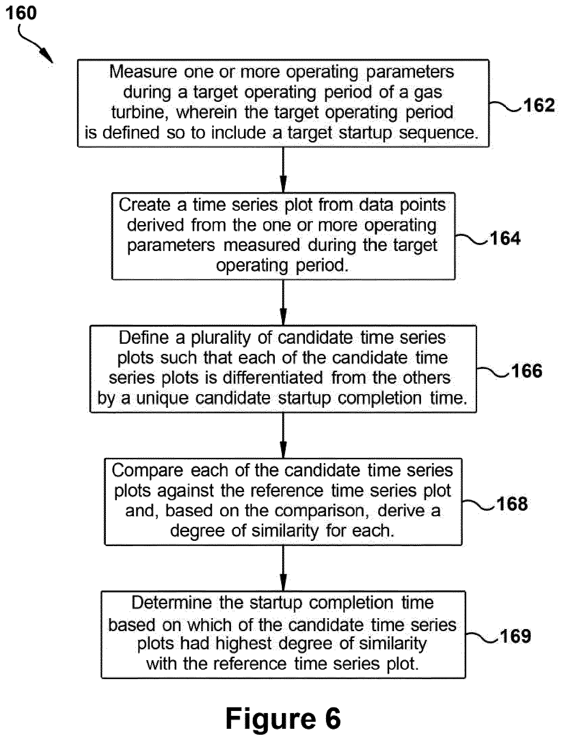

With reference now to Figures 5 and 6, alternative embodiments are illustrated in which the DTW process is used to determine a time of startup completion, which will be referred to herein as "startup completion time", for a target startup sequence. As shown in Figure 5, a target time series plot 140 is provided for a target startup sequence, with both turbine speed 102 and power output 103 being plotted against time. Given this, it is desired to determine the startup completion time, which is an unknown. To do this, in accordance with exemplary embodiments, a range of time is selected (or "selected time range") within which the startup completion time for the target startup sequence is expected to have occurred. For example, the selected time range may be defined as a range of time measured from the beginning-of start of the target startup sequence. As will be seen, in the exemplary case shown in Figure 5, the selected range is defined as the entire timeframe shown in the target time series plot 140. However, the range could be defined more narrowly in actual applications.

With the selected time range defined, the target time series plot 140 is used to define a plurality of time series plots, which will be referred to herein as "candidate time series plots". Each of the candidate time series plots may be differentiated from the others by a unique candidate time for startup completion (or "candidate startup completion time"). The candidate startup completion times may be defined at close intervals within the selected time range. Then, using the DTW methods described herein, each of the candidate time series plots is compared against a reference time series plot (not shown in Figure 5) to derive a degree of similarity for each. In the example of Figure 5, the degree of similarity is computed as a "distance" such that, as described above, lower values indicate greater similarity.

The computed DTW distances for each of the candidate startup completion times then is plotted on time series plot 140. For example, the distance values are plotted at the respective corresponding candidate startup completion times, thereby creating a DTW distance curve 145. According to exemplary embodiments, the DTW distance curve 145 then is used to determine the startup completion time for the target startup sequence. Specifically, as will be appreciated, the startup completion time is found at the candidate startup completion time that produced the candidate time series plot having the highest degree of similarity with the reference time series plot, which will be indicated by a minimum value within the DTW distance curve 145 (labeled in Figure 5 with numerical identifier "150"). Thus, the time 152 corresponding with the minimum 150 is deemed to be the startup completion time as determined by this method. Put another way, when the candidate startup completion time is equal to the time 152, the resulting candidate time series plot produced the highest degree of similarity with the reference startup sequence. It has been found that this high degree of similarity provides an accurate indicator of startup completion time.

With reference now to Figure 6, the process introduced above in relation to Figure 5 will be further demonstrated with reference to a flow diagram 160. The flow diagram 160 pertains to a process for determining a startup completion time for a target startup sequence. As shown, at an initial step 162, the process of the flow diagram 160 includes measuring one or more operating parameters during a target operating period of the gas turbine, wherein the target operating period is defined so to include a target startup sequence. At a step 164, as shown, the process includes creating a time series plot from data points derived from the one or more operating parameters measured during the target operating period. At step 166, the process includes defining a plurality of candidate time series plots such that each of the candidate time series plots are differentiated from the others by a unique candidate startup completion time. At a step 168, the process includes comparing each of the candidate time series plots against a reference time series plot and, based on the comparison, deriving the degree of similarity for each. Then, at a step 169, the startup completion time may be determined based on which of the candidate time series plots produced the highest degree of similarity with the reference time series plot. Specifically, this determination may include: a) first determining which of the candidate time series plots produced a highest value of the degree of similarity with the reference time series plot; b) then determining the candidate startup completion time that corresponds to the candidate time series plot that produced the highest value of the degree of similarity; and c) deeming a time of the candidate startup completion time that corresponds to the candidate time series plot that produced the highest value of the degree of similarity as the startup completion time for the target startup sequence.

As one of ordinary skill in the art will appreciate, the many varying features and configurations described above in relation to the several exemplary embodiments may be further selectively applied to form the other possible embodiments of the present invention. For the sake of brevity and taking into account the abilities of one of ordinary skill in the art, all of the possible iterations is not provided or discussed in detail, though all combinations and possible embodiments embraced by the several claims below or otherwise are intended to be part of the present application. In addition, from the above description of several exemplary embodiments of the invention, those skilled in the art will perceive improvements, changes and modifications. Such improvements, changes and modifications within the skill of the art are also intended to be covered by the appended claims. Further, it should be apparent that the foregoing relates only to the described embodiments of the present application and that numerous changes and modifications may be made herein without departing from the spirit and scope of the application as defined by the following claims and the equivalents thereof.

## Claims

1. A method (130) for determining a performance characteristic for a target startup sequence of a gas turbine (10), wherein the gas turbine (10) comprises a compressor (11), a combustor (13), and, drivingly coupled to the compressor (11), a turbine (12), the method (130) comprising the steps of:
measuring (132) one or more operating parameters during a target operating period of the gas turbine (10), the target operating period being selected so that the target operating period includes the target startup sequence;
creating (134) a time series plot from data points derived from the one or more operating parameters measured during the target operating period;
comparing (136) the time series plot against a reference time series plot and, based on the comparison, determining a degree of similarity therebetween; and
determining (138) a value for the performance characteristic based on the degree of similarity.

2. The method (130) according to claim 1, wherein the comparing (136) the time series plot against the reference time series plot comprises a dynamic time warping ("DTW") method; and wherein the one or more operating parameters include at least one of a rotor speed and a power output of the gas turbine.

3. The method (130) according to claim 2, wherein the DTW method is defined as an algorithm for determining a degree of similarity between two given time series plots by non-linearly warping in a time dimension to find an optimal match between the two given time series plots.

4. The method (130) according to claim 2, wherein the reference time series plot comprises data points derived from the one or more operating parameters measured during a previous startup sequence of the gas turbine (10), the previous startup sequence comprising a desirable startup outcome.

5. The method (130) according to claim 4, wherein the one or more operating parameters include both the rotor speed and the power output of the gas turbine (10).

6. The method (130) according to claim 5, wherein the data points used to create the time series plot each comprises a value of the rotor speed added to a corresponding value of the power output.

7. The method (130) according to claim 5, wherein the value of the performance characteristic comprises a classification of the target startup sequence as being either a successful startup or an unsuccessful startup.

8. The method (130) according to claim 5, wherein the gas turbine (10) comprises a plurality of startup sequence types, the plurality of startup sequence types comprising at least a first startup sequence type and a second startup sequence type; and
wherein the value of the performance characteristic comprises a classification of the target startup sequence as being either the first startup sequence type or second startup sequence type.

9. The method (130) according to claim 8, wherein the reference time series plot comprises a first reference time series plot and a second reference time series plot; and
wherein:
the first reference time series plot corresponds to the first startup sequence type, and the first reference time series plot comprises data points derived from the one or more operating parameters measured during a previous startup sequence of the first startup sequence type; and
the second reference time series plot corresponds to the second startup sequence type, and the second reference time series plot comprises data points derived from the one or more operating parameters measured during a previous startup sequence of the second startup sequence type.

10. The method (130) according to claim 9, wherein the step of comparing the target time series plot against the reference time series plot comprises:
comparing the target time series plot against the first reference time series plot and, based on the comparison, deriving a first degree of similarity;
comparing the target time series plot against the second reference time series plot and, based on the comparison, deriving a second degree of similarity;
further comprising the step of determining whether the target time series plot has a greater degree of similarity to the first reference time series plot or the second reference time series plot based on the first degree of similarity and the second degree of similarity;
wherein the classification of the target startup sequence is equal to:
the first startup sequence type if the target time series plot is determined to have the greater degree of similarity with the first reference time series plot; or
the second startup sequence type if the target time series plot is determined to have the greater degree of similarity with the second reference time series plot.

11. The method (130) according to claim 4, wherein the target startup sequence is defined between a beginning of the target startup sequence ("beginning-of-start") and an end of the target startup sequence ("end-of-start"), wherein the end-of-start is defined as a startup completion time of the target startup sequence; and
wherein the value for the performance characteristic comprises the startup completion time of the target startup sequence.

12. The method (130) according to claim 11, wherein:
the step of creating the time series plot from the data points derived from the one or more operating parameters measured during the target operating period comprises:
creating candidate time series plots from the data points derived from the one or more operating parameters measured during the target operating period, wherein the candidate time series plots are created so that each comprises a unique startup completion time;
the step of comparing the time series plot against the reference time series plot and, based on the comparison, determining the degree of similarity therebetween comprises:
comparing each of the candidate time series plots against the reference time series plot and, based on the comparison, deriving the degree of similarity between each of the candidate time series plots and the reference time series plot.

13. The method (130) according to claim 12, wherein:
the step of determining the value for the performance characteristic based on the degree of similarity comprises:
determining which of the candidate time series plots produced a highest value of the degree of similarity with the reference time series plot;
determining the candidate startup completion time that corresponds to the candidate time series plot that produced the highest value of the degree of similarity; and
deeming a time of the candidate startup completion time that corresponds to the candidate time series plot that produced the highest value of the degree of similarity as the startup completion time for the target startup sequence.

14. The method (130) according to claim 13, further comprising the step of wherein the candidate end-of-starts of the plurality of the time series plots are varied over a range contained within the operating period.

15. A system (130) comprising:
a gas turbine (10) comprising a compressor (11), a combustor (13), and, drivingly coupled to the compressor (11), a turbine (12);
a first sensor (46) for measuring a turbine speed of the gas turbine;
a second sensor (46) for measuring a power output of the gas turbine;
a controller (31) operably connected to the gas turbine, the first sensor, and the second sensor, the controller comprising:
a hardware processor (48);
a machine-readable storage medium (49) on which is stored instructions that cause the hardware processor to execute a process for determining a performance characteristic for a target startup sequence of the gas turbine;
wherein the process comprises the following steps:
measuring (132) the turbine speed and the power output of the gas turbine (10) during a target operating period of the gas turbine (10), the target operating period being selected so that the target operating period includes the target startup sequence;
creating (134) a time series plot from data points derived from the turbine speed and power output measured during the target operating period;
comparing (136) the time series plot against a reference time series plot and, based on the comparison, determining a degree of similarity therebetween; and
determining (138) a value for the performance characteristic based on the degree of similarity;
wherein the comparing the time series plot against the reference time series plot comprises a dynamic time warping ("DTW") method, wherein the DTW method is defined as an algorithm for determining a degree of similarity between two given time series plots by non-linearly warping in a time dimension to find an optimal match between the two given time series plots; and
wherein the reference time series plot comprises data points derived from the turbine speed and power output measured during a previous startup sequence of the gas turbine (10), and wherein the data points used to create the time series plot each comprises a value of the rotor speed added to a corresponding value of the power output.
